Europäisches Patentamt

European Patent Office

Office européen des brevets

(11) Publication number : **0 485 127 A1**

# (12) EUROPEAN PATENT APPLICATION

(21) Application number : **91310126.7**

(22) Date of filing : **01.11.91**

(51) Int. Cl.$^5$ : **B29B 11/04, B29B 11/10, B29C 47/04, C08L 21/00, // B29K21/00**

(30) Priority : **06.11.90 JP 299049/90**

(43) Date of publication of application :
**13.05.92 Bulletin 92/20**

(84) Designated Contracting States :
**DE ES FR GB IT**

(71) Applicant : **Bridgestone Corporation**
**10-1, Kyobashi 1-Chome Chuo-Ku**
**Tokyo 104 (JP)**

(72) Inventor : **Katakabe, Yuji, c/o Bridgestone**
**Corp. Techn. Ctr.**
**3-5-9-502, Ogawahigashi-cho**
**Kodaira-shi, Tokyo (JP)**

(74) Representative : **Silverman, Warren et al**
**HASELTINE LAKE & CO. Hazlitt House 28**
**Southampton Buildings Chancery Lane**
**London WC2A 1AT (GB)**

(54) Process and apparatus for manufacturing an unvulcanized rubber structure.

(57) In the manufacture of an unvulcanised rubber structure, rubber compositions having different vulcanization rates are distributed in relation to each other in forming said structure to correspond to a distribution of vulcanization temperature rises in the respective rubber compositions to the extent that, on vulcanisation, final degrees of vulcanisation are obtained in the respective rubber compositions which are substantially uniform throughout the then vulcanised structure. Constituent rubbers having different vulcanization rates obtained by varying the mixing ratio of carbon-containing masterbatch compound and vulcanizing agent or by varying the mixing ratio of rubber having a fast vulcanization rate and rubber having a slow vulcanization rate, are successively mixed and extruded by means of a mixer-extruder and they are respectively worked into sheets by means of calender rolls. The sheets are successively adhered to a shaping roll respectively at predetermined positions. The above-mentioned mixing ratio, sheet thickness and adherence position are centrally controlled by a control unit.

FIG. 3

The present invention relates to an apparatus for manufacturing an unvulcanized rubber structure consisting of a rubber component having a thick wall (gauge) such as, for example, a tread portion of a medium-size or larger-size tyre of a construction work truck.

In general, when forming a tread of a medium-size or larger-size tyre, after a rubber material suitable for use as a tread has been heated by rolls, it is shaped into a sheet by means of a calender, then this sheet is wrapped around a green case composed of such members as a ply cord and a bead manufactured separately which is to be laminated therewith and in this way an unvulcanized rubber structure for providing a tread is formed.

A green tyre having such unvulcanized rubber structure for forming a tread therein is supplied to a dome type vulcanizing machine, and normally the green tyre is vulcanized for about 6 hours at a vulcanizing temperature of 135°C-145°C to make the desired vulcanized product.

When within the vulcanizing machine, the outside of the green tyre is covered by a metal mold and its inside is pressed against the mould by inflation of a bladder therein. It is heated from both the inside and the outside to vulcanize it and give it its final shape.

Any portion of the green tyre having a thick gauge, such as a tread, will have its temperature rise retarded during vulcanization as the sampling position is shifted from the surface of the tread towards the interior thereof and so, a temperature distribution of elevated temperature is produced in the interior of the tread.

To attain an optimum degree of vulcanization, even within the interior of the tread, a vulcanizing condition has been established in the prior art whereby the interior of the tread, where temperature rise is slowest, is taken as a standard while preventing the tread surface temperature from rising above a certain predetermined temperature.

This means that, with an unvulcanized rubber structure, the vulcanizing time would become too long in the prior art in view of the need to vulcanize the entire tread, and a surface portion of a tread would be over-vulcanized. This would result in degrading of the performance of the tyre. Anti-cutting property and abrasion resistance, in particular, would be degraded.

It is thus an object of this invention to obtain a uniform degree of vulcanization over an entire thick-walled rubber structure, in particular a tyre tread, and to avoid slowing-down of vulcanization during vulcanization as the site of vulcanization is shifted to the interior of the structure.

According to one aspect of the present invention, there is provided a process for the manufacture of an unvulcanized rubber structure, in which rubber compositions having different vulcanization rates are distributed in relation to each other in forming said structure to correspond to a distribution of vulcanization temperature rises in the respective rubber compositions to the extent that, on vulcanisation, final degrees of vulcanisation are obtained in the respective rubber compositions which are substantially uniform throughout the then vulcanised structure.

In a second aspect, this invention provides an apparatus for use in the process of the invention which has mixer-extruder means for mixing carbon masterbatch compound and vulcanizing agent and extruding mixtures obtained as constituent rubbers having different vulcanization rates, working means for respectively working the constituent rubbers successively mixed and extruded by said mixer-extruder means and having different vulcanization rates into a sheet form, shaping means for successively causing rubber sheets worked by said working means and having different vulcanization rates to adhere to previously worked consitutent rubbers at a variable position determined by the positions of said rubber sheets and control means for centrally controlling the respective said means; and in that said control means is constructed to control said mixer-extruder means so as to mix and extrude constituent rubbers having different vulcanization rates by appropriately varying the mixing ratio of the carbon masterbatch compound and the vulcanizing agent, to control said working means so as to regulate the thickness of the constituent rubber sheets to a predetermined value, and to control said shaping means so as to cause the constituent rubber sheets having different vulcanization rates to adhere to each other, by respectively positioning them at predetermined positions.

In a variant of this apparatus, there are mixer-extruder means for mixing separately produced rubber compositions having a relativly fast and relativly low vulcanisation rate respectively at a variable mixing ratio and extruding the constituent rubbers thereby obtained having different vulcanisation rates, working means for respectively working the constituent rubbers successively mixed and extruded by said mixer-extruder means and having different vulcanisation rates into a sheet form, shaping means for successively causing constituent rubber sheets worked by said working means to adhere to previously worked constituent rubbers at a variable position determined by the positions of said rubber sheets and control means for centrally controlling respective said means; and in that said control means is constructed control to said mixer-extruder means so as to mix and extrude constituent rubbers having relative fast and relatively slow vulcanization rates by appropriately varying the mixing ratio of the rubber having a relative fast vulcanization rate and the rubber having a relatively slow vulcanization rate, to control said working means so as to regulate the thickness of the constituent rubber sheets to a predetermined value, and to control said shaping means so as to cause the constituent rubber sheets having different vulcanization rates to adhere to each other by respectively positioning them at predetermined positions.

This invention is based on the observation that in a thick-walled rubber structure having largely different vulcanization temperature rises between the surface and inner portions during vulcanization, by providing an unvulcanized rubber structure such that rubber having a slow vulcanization rate is disposed in the region of the surface where the temperature rise is fast and rubbers having relative fast vulcanisation rates are successively distributed in the interior of the structure at positions which correspond to positions where temperature rise is successively slower, a final degree of vulcanization which is substantially uniform over the entire structure can be obtained. Hence desired properties of rubber can be obtained over the entire structure, and thus degradation of performance can be prevented.

By varying the mixing ratio of vulcanizing agents (cross-linking agent, vulcanization accelerator etc.) to carbon masterbatch compound (rubber compound mixed without vulcanizing agent) rubber compositions having different vulcanization rates can be produced. In the apparatus according to the present invention, such rubber compositions having different vulcanization rates are produced successively by the mixer-extruder by controlling feed to the mixer-extruder means. Then the respective rubber compositions are formed into sheets having a desired thickness by the working means controlled by the control means, and subsequently in the shaping means controlled similarly by the control means, the sheets are adhered in turn to previously produced sheets so as to be co-extensive therewith. In this way, an unvulcanized rubber structure, in which rubber compositions having desired vulcanization rates are distributed in correspondence to a temperature distribution of vulcanization temperature rises can be manufactured efficiently.

Since rubber compositions having different vulcanization rates can be produced also by varying the mixing ratio of rubber having a fast vulcanization rate and rubber having a slow vulcanization rate a similar unvulcanized rubber structure can be obtained by using mixer-extruder means to provide a mixing ratio of rubber composition having a fast vulcanization rate and rubber composition having a slow vulcanization rate which may be appropriately varied, and by subsequently employing similar steps to those described above.

For a better understanding of the invention and to show how the same can be carried into effect reference will now be made, by way of example only, to the accompanying drawings wherein:

Fig. 1 is a schematic view of an unvulcanized rubber structure manufacturing apparatus according to one preferred embodiment of the present inventions;

Fig. 2 is a cross-sectional view through half of an unvulcanized rubber tyre structure;

Fig. 3 is a cross-section view through, the same half tyre showing the temperature distribution of temperature-rise at the time of vulcanization;

Fig 4. is a diagram showing variations in a rubber property with respect to vulcanization time of a conventional thick rubber structure;

Fig. 5 is a schematic view of an unvulcanized rubber structure manufacturing apparatus according to another preferred embodiment of the present invention;

Fig. 6 is a schematic perspective view of a calender roll section in the same apparatus; and

Fig. 7 is a cross-section view of a tyre of cap-base type.

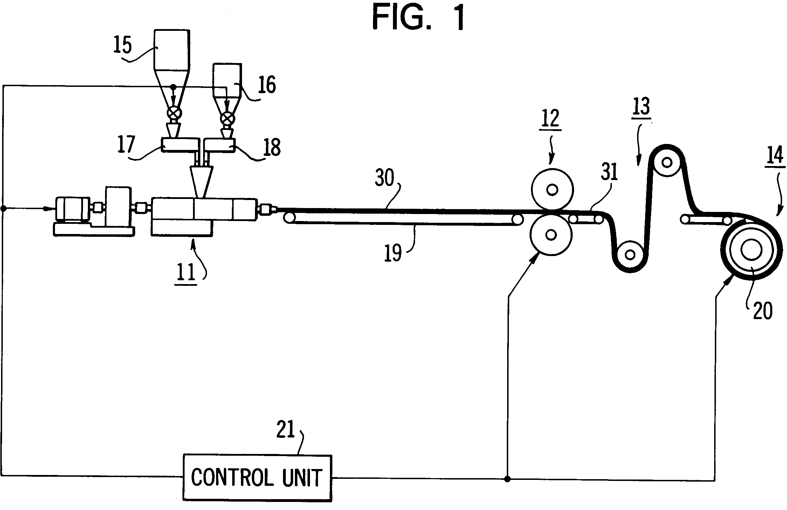

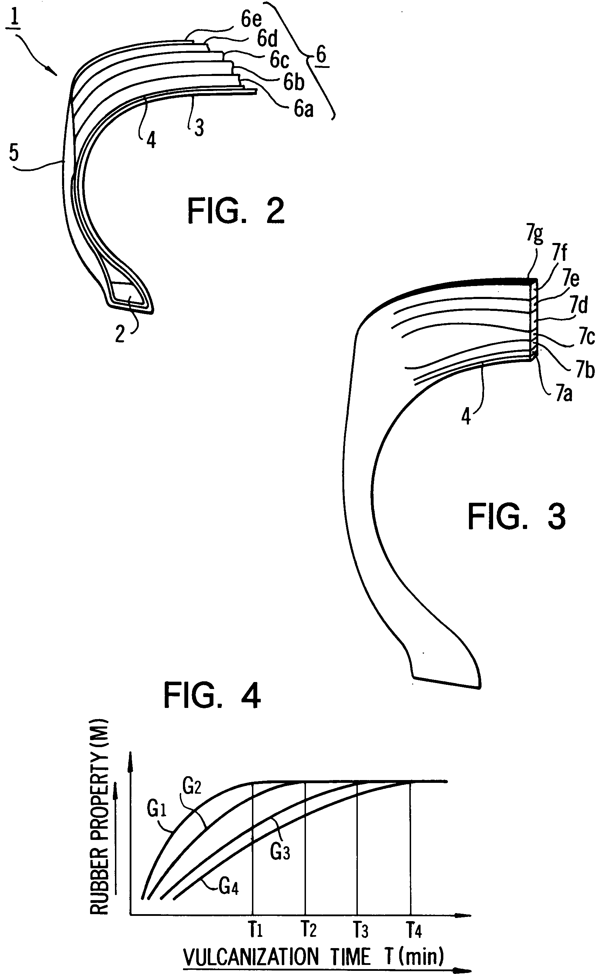

In the accompanying drawings, Figures 2 to 4 provide a basis for discussing the apparatus of Figure 1 for manufacturing an unvulcanized rubber structure for providing a tread portion in a large-sized tyre to be used on trucks employed in construction work.

The manufacturing apparatus of Figure 1 comprises a continuous mixer-extruder 11, calender rolls 12, cooling drums 13 and a green tyre assembly machine 14 disposed sequentially in the direction of supplies of rubber.

The continuous mixer-extruder 11 is provided with a tank 15 for storing carbon masterbatch compound and another tank 16 for storing vulcanizing agents. The masterbatch compound and the vulcanizing agents are supplied from these tanks through feeders 17 and 18, respectively, to the same mixing section, and after having been mixed together, they are extruded.

Since the feed rates of feeders 17 and 18 can be adjusted, the mixing ratio of the masterbatch compound and the vulcanizing agents can be appropriately and arbitrarily varied. Accordingly, tread forming rubbers 30 having different vulcanization rates corresponding to mixing ratio can be extruded continuously.

The tread forming rubber 30 extruded from the continuous mixer-extruder 11 is transported to the calender rolls 12 by a conveyor 19, and a tread rubber sheet having a predetermined thickness (gauge) and a predetermined width is formed.

At the calender rolls 12, there can be adjusted arbitrarily the gap distance between the rolls to determine the gauge of tread rubber sheet 31 emerging from the rolls 12 as well as cutter positions which determine the width of the tread rubber sheet 31.

The tread rubber sheet 31 emerging from between the calender rolls 12 passes over cooling drums 13 and reaches the green tyre assembly machine 14 in which the tread rubber sheet 31 is wrapped around a shaping drum 20 and caused to adhere thereto. The position the tread rubber sheet 31 is in when it adheres to the drum 20 can be adjusted by changing the position in the axial direction of the shaping drum 20, and also the wrapped length of a sheet can be adjusted by changing the number of revolutions (total revolving angle) which the shaping drum 20 undergoes.

The equipment described above is centrally controlled by a control unit 21. This control unit 21 outputs commands (a) to the continuous mixer-extruder 11 for controlling the operations of the feeders 17 and 18, that is a control command for directing a mixing ratio of masterbatch compound and vulcanizing agents, (b) to the calender rolls 12 for controlling gap distance between the rolls as well as cutter positions, that is, a control command for setting gauge and width of the tread rubber sheet 31 to be wrapped around the shaping drum 20, and (c) to the green tyre making machine 14 for controlling the position in the axial direction as well as the number of revolutions of the shaping drum 20, that is, a control command for setting the adhering position of tread rubber sheet to drum 20 and the wrapped length of the tread rubber sheet 31.

A computer in the control unit 21 stores control data for a series of timing controls whereby tread rubber sheets having different vulcanization rates are sequentially wrapped at desired positions, for different sizes and kinds of tyres. It is on the basis of the above-mentioned control date that the aforementioned control commands are successively outputted from the control unit 21.

Accordingly, as a result of the central control by the control unit 21, an unvulcanized rubber structure made up from tread rubber sheets having predetermined vulcanization rates and wrapped around the shaping drum 20 at predetermined positions with respect to each other can be formed easily and efficiently.

In the conventional method for producing unvulcanized rubber structures, since rubber compositions having different vulcanization rates would be fed from different mixer-extruders, then, when superposing rubber sheets having different vulcanization rates, the switching work for switching feed sources is extremely troublesome and human intervention is necessitated at every important position. This militates generally against automation. However, in the illustrated embodiment, since a series of processes is effected to interrupt the processes for switching purposes, production efficiency is extremely good. Also, automation can be easily realized.

The unvulcanized rubber structure which can be formed as a result of the aforementioned control by the control unit 21 will now be described.

Figure 2 is a cross-sectional view showing half of an unvulcanized rubber tyre structure 1 produced on apparatus according to Figure 1 before vulcanization.

This tyre is a large-sized tyre, typically 27 inches (68.6 cm) in width and 49 inches (124.5 cm) in rim inner diameter, and it is formed by superposing rubber sheets 2.3-3.0 mm in thickness (gauge) and 700 mm in width.

Lateral edge portions of a carcass ply 4 lined with an inner liner 3 are wrapped around beads 2, and the central portion of the carcass ply 4 swells out in a toroidal shape. To the opposed side portions of the outside of this carcass ply 4 are applied side treads 5, and a top tread 6 laminated in five layers is applied to the outer circumferential portion of the outside of the carcass ply 4.

The top tread 6 is composed of rubber sheets having desired thickness and different vulcanization rates from a first layer 6a of the tread forming the lowermost layer held in contact with the carcass ply 4, via a second layer 6b, a third layer 6c and a fourth layer 6d up to a fifth layer 6e of the tread forming the outermost layer. The distribution of the respective layers of the top tread 6 corresponds to the temperature distribution as the vulcanization temperature rises.

Figure 3 is a cross-sectional view through the half tyre of Figure 2 showing the above mentioned temperature distribution during vulcanization.

During vulcanization a metal mold is fitted to the exterior surface of the top tread of the unvulcanized rubber structure 1 while on the inside of the structure a bladder swells so as to pinch the unvulcanized rubber structure 1 between it and the metal mold and the same structure 1 is heated from both the inside and the outside at a temperature of approximately 150°C.

The temperature distribution during heating at the inner portion when the top tread 6 has been heated from both sides can be graphically depicted on the basis of simulation by a computer using calculations, obtained by a finite element method; Figure 3 shows typical results. In view of the precision of calculations, a distribution diagram amy be constructed showing 5 - 10°C temperature steps.

The thus calculated and depicted temperature distribution almost coincides with the result of measurements conducted by actually embedding thermocouples at the respective positions in a green tyre.

The temperature drops as one shifts to the interior of the structure. Hence, when reaching the third layer 7c, which is the deepest layer, the lowest raised temperature is encountered for an optimum degree of vulcanization. Thus the first layer 7a held in contact with the carcass ply 4 reaches 130-140°C, the second layer 7b reaches 125-130°C, the third layer 7c has the lowest temperature at 120-125°C, the fourth layer 7d reaches 125-130°C, the fifth layer 7e reaches 130-140°C, the sixth layer 7f reaches 140-150°C, and the temperature of the seventh layer 7g forming the outermost layer is 150°C.

The distribution of tread layers shown in Figure 2 and described above corresponds to this temperature distribution of vulcanization temperature rises in that, the first tread layer 6a corresponds to the first layer 7a of the temperature distribution, the second tread layer 6b corresponds to the second, third and fourth layers 7b, 7c and 7d of the temperature distribution, the third tread layer 6c corresponds to the fifth layer 7e of the temperature distribution , the fourth tread layer 6d corresponds to the sixth layer 7f of the temperature distribution, and the fifth tread layer 6e corresponds to the seventh layer 7g of the temperature distribution.

Since the second tread layer 6b between the first tread layer 6a and the third tread layer 6c corresponds to the lowest temperature distribution,the temperature distribution being largely in the range $130\sim140°C$, constituent rubber of the same kind having an equal vulcanization speed can be employed for these layers.

For the second tread layer 6b which is the layer with the lowest raised temperature distribution, there is employed rubber $G_1$ having a fast vulcanization speed. For the first and third tread layers 6a and 6c which are layers having the next lowest raised temperature distribution, there is employed rubber $G_2$ having a slower vulcanization rate than rubber $G_1$. For the fourth tread layer 6d having a next lowest raised temperature distribution there is employed rubber $G_3$ having an even slower vulcanization rate. Finally for the fifth tread layer 6e having the highest raised temperature distribution there is employed rubber $G_4$ having the slowest vulcanization rate of all.

The vulcanization rate of rubber is determined from the vulcanization time T before optimum rubber properties can be obtained when the same rubber is vulcanized at a constant vulcanization temperature, and it is inversely proportional to that vulcanization time T. Thus, the shorter the vulcanization time T, the faster the vulcanization rate. If the relationship between the vulcanization time T and variations in the rubber properties M are graphically represented with respect to the above-described rubbers, $G_1$, $G_2$, $G_3$, and $G_4$, the relationships shown in Figure 4 are obtained. In this figure, the optimum rubber properties are obtained at the points where the respective curves reach the horizontal lines.

More particularly, at a constant temperature A°C, the rubber $G_1$ can attain the optimum properties in a vulcanization time $T_1$, the rubber $G_2$ can obtain the optimum properties in a vulcanization time $T_2$, the rubber $G_3$ can obtain the optimum properties in a vulcanization time $T_3$, the rubber $G_4$ can obtain the optimum properties in a vulcanisation time $T_4$. Thus, the relationship $T_1 < T_2 < T_3 < T_4$ is fulfilled.

Since a practical vulcanization effect can be represented for a product having a vulcanization temperature $\underline{a}$ by a vulcanization time $\underline{t}$, a degree of vulcanization S indicating vulcanized condition of rubber is represented by the following formula:

$$S = \int \underline{a} \, dt / A \times T$$

For instance, the degree of vulcanization $S_1$ of rubber $G_1$ disposed in the second tread layer 6b takes the following value when it is vulcanized at a temperature $\underline{a}_1$ for time $\underline{t}$;

$$S_1 \simeq \underline{a}_1 \times \underline{t} / A \times T_1$$

If rubber used commonly as tread rubber is vulcanized at a temperature corresponding to the temperature to which the second tread layer 6b has been raised, it takes 370 minutes until the degree of vulcanizing S becomes "1" for obtaining the optimum rubber properties. However, in the case of rubber whose vulcanization rate is twice as fast as the above-mentioned conventional rubber, the necessary vulcanization time is shortened to 325 minutes. In the case of rubber whose vulcanization rate is three times as fast as that of the conventional rubber, the necessary vulcanization time is greatly shortened to 305 minutes.

On the other hand, if the above-mentioned conventional rubber is vulcanized for 370 minutes at a temperature corresponding to the temperature to which the fifth tread layer 6e is raised, this layer having the highest temperature rise, the degree of vulcanization would increase to "6.2" representing over-vulcanization. If the vulcanization time is shortened to 325 minutes, the degree of vulcanization decreases to "5.3", and if it is further shortened to 305 minutes, the degree of vulcanization decreases to "4.9". However, it is to be noted that the degrees of vulcanization of "5.3" and "4.9" still somewhat represent over-vulcanization, and vulcanized rubber having good heat build-up property and good abrasion-resistance cannot be obtained.

Now, if an above-mentioned rubber having a vulcanization speed twice as fast as the conventional rubber is unvulcanized at a temperature corresponding to the temperature to which the fifth tread layer 6e is raised when subject to the above-described processing, the degree of vulcanization can be greatly decreased to "2.6" for a vulcanization time of 325 minutes, and to "2.4" for a vulcanization time of 305 minutes. This implies that heat build-up property and abrasion-resistance have been improved by 5-10 % in view of the relationship between degree of vulcanisation and performance of a tyre.

Moreover, by employing rubber having a vulcanization rate three times as fast as the conventional rubber for the deepest layer rubber $G_1$, employing rubber having a vulcanisation rate half as fast as the conventional rubber for the surface layer rubber $G_4$, and arranging rubbers having vulcanization rates about twice as fast and once as fast respectively as the conventional rubber sequentially for the middle layer rubbers $G_2$ and $G_3$, the vulcanization degree of all the layers can be made nearly uniform such as "1"-"2.4" for a vulcanization time of 305 minutes.

In other words, tread rubber having an appropriate and uniform degree of vulcanization can be manufactured in a greatly shortened vulcanization time.

The above-described tread rubber can be obtained by vulcanizing the unvulcanized rubber structure 1 illustrated in Figure 2. The unvulcanized rubber structure 1 is manufactured by successively wrapping the tread rubber sheet 31 around the carcass ply 4 fitted to the shaping drum 20 in the green tyre assembly machine 14 to form the respective rubber layers 6a, 6b, 6c, 6d, and 6e, and formation of these respective rubber layers is controlled by the control unit 21 on the basis of prestored data.

Since a tread rubber sheet 31 of rubber $G_2$ forming the rubber layer 6a is initially wrapped, in the beginning the mixing ratio of masterbatch compound and vulcanizing agents in the continuous mixer-extruder 11 is adjusted to be such that the vulcanization rate may be about twice as fast as for the conventional rubber. Hence the continuous mixer-extruder 11 mixes and extrudes tread rubber composition 30 whose vulcanization rate is about twice as high as conventional rubber, and feeds it to the calender rolls 12.

The calender rolls 12 shape such rubber $G_2$ into the above-described tread rubber sheet 31 having predetermined gauge and width, and delivers it to the next work station. The tread rubber sheet 31 passes across cooling drums 13, and after having been positioned in a predetermined manner, it is wrapped around the shaping drum 20 in the green tyre assembly machine 14.

The number of revolutions of the shaping drum 20 is controlled so that the tread rubber sheet 31 consisting of the rubber $G_2$ is wrapped in a superposed fashion until the rubber layer 6a attains a predetermined thickness, and also the mixing ratio in the continuous mixer-extruder 11 is maintained at the initial adjusted value until the rubber $G_2$ has been fed in the amount corresponding to the necessary length.

At about the time when wrapping of the initial layer 6a has been completed, the mixing of carbon masterbatch compound and vulcanizing agents in the continuous mixer-extruder 11 will already have been varied so as to feed the rubber $G_1$ of the next layer 6b, that is, rubber having a vulcanization rate three times as high as the conventional rubber. In this way, the rubber layers 6a, 6b, 6c, 6d and 6e are continuously formed from rubbers $G_2$, $G_1$, $G_2$, $G_3$, and $G_4$ having successively different vulcanization rates, and,therefore, production efficiency which is very good is achieved.

Whereas the mixing ratio of masterbatch compound and vulcanizing agents was varied in the continuous mixer-extruder 11 for feeding constituent rubbers having different vulcanization rates in the above-mentioned preferred embodiment, rubber having a desired vulcanization rate can be obtained also by storing rubber batches having a fast vulcanization rate and a slow vulcanization rate respectively in the tanks 15 and 16 of the continuous mixer-extruder 11 and changing the mixing ratio while adjusting the feed rates of the respective rubbers.

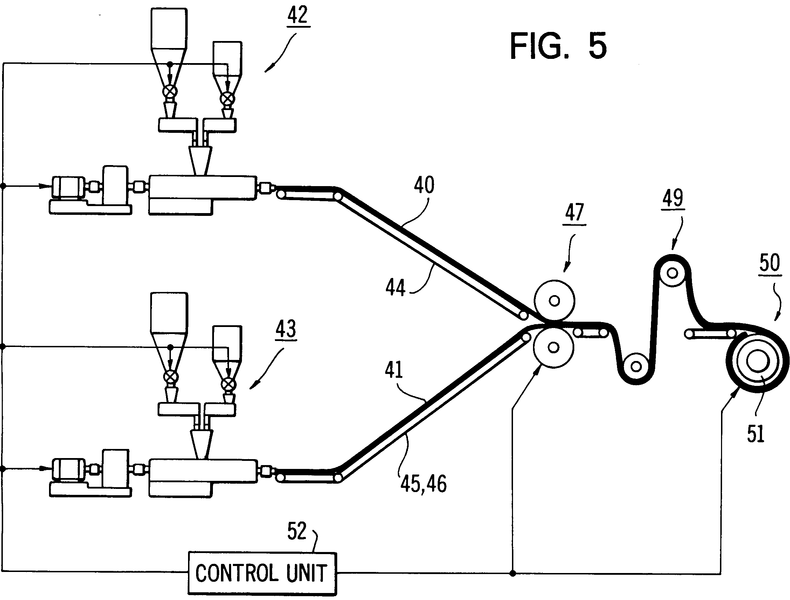

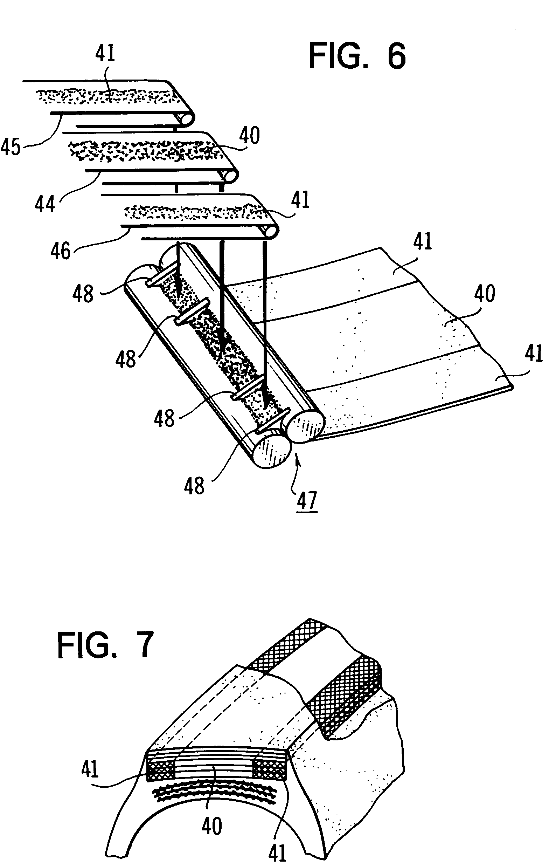

In the case of manufacture of a tyre of cap-base type, in which in a middle tread layer formed of cap rubber 40 is disposed at the center and base rubber is disposed on the opposite sides thereof as shown in Figure 7, there is used an unvulcanized rubber structure manufacturing apparatus, in which two continuous mixer-extruders 42 and 43 are disposed in juxtaposition as shown in Figure 5 and one is used as a source of cap material while the other is used as a source of base material. The continuous mixer-extruders 42 and 43 are each provided with two tanks, so that carbon rubber masterbatch compound and vulcanizing agents of different kinds are stored and the mixing ratio in both mixer-extruders can be adjusted.

Cap rubber 40 mixed and extruded from the continuous mixer-extruder 42 is transported by a conveyor 44 and fed to the central portion of calender rolls 47. Meanwhile, base rubber 41 mixed and extruded in the continuous mixer-extruder 43 is transported by conveyors 45 and 46 and fed to opposite side portions of the calender rolls 47 (see Figure 6).

Four wedge-shaped partition plates 48 are disposed in the calender rolls 47, as shown in Figure 6, at predetermined positions to partition the central portion and the side portions. The cap rubber 40 is fed to the central portion and the base rubber 41 is fed to the side portions. Accordingly, the rubber sheet emerging out of the calender rolls 47 is integrally formed of the cap rubber 40 at the centre and the base rubber 41 on either side thereof.

The thus formed rubber sheet passes over cooling drums 49, and, after having been positioned, it is wrapped around the shaping drum in a tyre assembly machine 50.

The various components of the illustrated apparatus are centrally controlled by a control unit 52.

In this way, an unvulcanized rubber structure suitable for use in a tyre of cap-base type as shown in Figure 7 and adapted to the vulcanization temperature rise can be formed easily.

In summary, by integrally forming an unvulcanized rubber structure of desired degree of vulcanization by combining constituent rubbers of different kinds, using two or more continuous mixer-extruders disposed in juxtaposition, the desired unvulcanized rubber structure can-be manufactured without there being significant drop in production efficiency. It is to be noted that the present invention is not limited to production of the tread portion of a large-sized tyre, but it is applicable to other thick-walled rubber structures.

## Claims

1. A process for the manufacture of an unvulcanized rubber structure, in which rubber compositions having different vulcanization rates are distributed in relation to each other in forming said structure to correspond to a distribution of vulcanization temperature rises in the respective rubber compositions to the extent that, on vulcanisation, final degrees of vulcanisation are obtained in the respective rubber compositions which are substantially uniform throughout the then vulcanised structure.

2. A process as claimed in claim 1, wherein, in the manufacture of a tyre, said rubber composition sheets are wound around a shaping drum in superposed fashion with one or more turns of each rubber composition sheet being wound on before a change is made to winding on of the next rubber composition sheet until a final turn of a final rubber composition sheet has been wound on thereby to produce a tyre tread for said tyre.

3. An apparatus for manufacturing an unvulcanized rubber structure by the process of claim 1, characterized by mixer-extruder means (11) for mixing carbon masterbatch compound and vulcanizing agent and extruding mixtures obtained as constituent rubbers having known different vulcanization rates, working means (12) for respectively working the constituent rubbers successively mixed and extruded by said mixer-extruder means and having different vulcanization rates into a sheet form, shaping means (14) for successively causing rubber sheets worked by said working means and having different vulcanization rates to adhere to previously worked consitutent rubbers at a variable position determined by the positions of said rubber sheets and control means for centrally controlling the respective said means (11, 12, 14); and in that said control means is constructed to control said mixer-extruder means so as to mix and extrude constituent rubbers having different vulcanization rates by appropriately varying the mixing ratio of the carbon masterbatch compound and the vulcanizing agent, to control said working means so as to regulate the thickness of the constituent rubber sheets to a predetermined value, and to control said shaping means so as to cause the constituent rubber sheets having different vulcanization rates to adhere to each other, by respectively positioning them at predetermined positions.

4. An apparatus for manufacturing an unvulcanized rubber structure by the process of claim 1; characterized in that said apparatus comprises mixer-extruder means (42, 43) for mixing separately produced rubber compositions having a relatively fast and a relatively slow vulcanization rate respectively at a variable mixing ratio and extruding the constituent rubbers thereby obtained having different vulcanization rates, working means (47) for respectively working the constituent rubbers successively mixed and extruded by said mixer-extruder means and having different vulcanization rates into a sheet form, shaping means (50) for successively causing constituent rubber sheets worked by said working means to adhere to previously worked constituent rubbers at a variable position determined by the positions of said rubber sheets, and control means (52) for centrally controlling respective said means (42, 43, 47, 50); and in that said control means is constructed to control said mixer-extruder means so as to mix and extrude constituent rubbers having relatively fast and relative slow vulcanizations rates by appropriately varying the mixing ratio of the rubber having a relatively fast vulcanization rate and the rubber having a relatively slow vulcanization rate, to control said working means so as to regulate the thickness of the constituent rubber sheets to a predetermined value, and to control said shaping means so as to cause the constituent rubber sheets having different vulcanization rates to adhere to each other by respectively positioning them at predetermined positions.

5. An apparatus for manufacturing an unvulcanized rubber structure as claimed in claim 3 or 4, wherein said control means (21, 52) controls said mixer-extruder means (11, 42, 43), said working means (12, 47) and said shaping means (14, 50) on the basis of data prestored in the control unit (21, 52).

6. An apparatus for manufacturing an unvulcanized rubber structure as claimed in claim 3,4 or 5, wherein said unvulcanized rubber structure is an unvulcanized rubber structure for forming a tyre tread, said mixer-extruder means (11,42,43) is a continuous mixer-extruder, said working means is constituted by calender rolls (12,47), and said shaping means is a green tyre assembly machine.

7. An apparatus for manufacturing an unvulcanized rubber structure as claimed in claim 6, wherein constituent rubber sheets having different vulcanization rates are successively wrapped around a shaping drum (20,51) in a superposed fashion.

8. An apparatus for manufacturing an unvulcanized rubber structure as claimed in any one of claims 3 to 7, wherein said mixer-extruder means (11, 42, 43) consists of a plurality of mixer-extruders disposed in juxtaposition to provide simultaneous supply of constituent rubber sheets having different vulcanization rates toward said shaping means (14,50).

9. An apparatus for manufacturing an unvulcanized rubber structure as claimed in claim 8, wherein constituent rubbers extruded from said respective mixer-extruders are worked into an integral sheet by said working means (12, 47).

# FIG. 1

EP 0 485 127 A1

1

6e
6d
6c  6
6b
6a

5
4  3

2

FIG. 2

7g
7f
7e
7d
7c
7b
7a

4

FIG. 3

FIG. 4

RUBBER PROPERTY (M)

G1
G2

G3

G4

T1   T2   T3   T4

VULCANIZATION TIME  T (min)

FIG. 5

FIG. 6

FIG. 7

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DR. WERNER HOFMANN 'VULKANISATION UND VULKANISATIONHILFSMITTEL' 1965 , FARBENFABRIKEN BAYER AG , LEVERKUSEN , DE <br> * subchapters 1.1.3.3. and 1.1.3.4 * <br> * page 29, line 15 - page 35, line 34 * <br> * subchapter s 1.2.2.2.1 and 1.2.2.2.2 ; and very specially page 45, line 26 * <br> * page 43, line 15 - page 46, line 36 * <br> --- | 1 | B29B11/04 <br> B29B11/10 <br> B29C47/04 <br> C08L21/00 <br> //B29K21:00 |
| X | DR. SIEGFRIED BOSTRÖM AND DR.-ING. ERICH BOBETH 'KAUTSCHUK - HANDBUCH BAND 3' 1958 , BERLINER UNION , STUTTGART , DE <br> * subchapter 3.1.1.11 * <br> * page 100, line 42 - page 103, line 20 * <br> * subchapter 3.2.1.4 ; and very specially page 138, line 30 * <br> * page 138, line 1 - page 140, line 3 * <br> --- | 1 | |
| Y | US-A-2 345 518 (DAVID WENDEL) <br><br> * the whole document * <br> --- | 1,3,4,6, 8,9 | |
| Y | US-A-1 434 892 (MARION M. MORRISON ET AL.) <br><br> * the whole document * <br> --- | 1,3,4,6, 8,9 | **TECHNICAL FIELDS SEARCHED (Int. Cl.5)** <br><br> B29B <br> B29C <br> B29D <br> B32B |
| A | CH-A-417 937 (THE FIRESTONE TIRE & RUBBER COMPANY.) <br> * specially figure 3 * <br> * claims I,II,III,1-13 * <br> --- | 1 | |
| A | US-A-4 147 577 (NORIO KOBAYASHI ET AL.) <br> * claims 1-3; figures 1-13 * <br> --- | 2,6,7,8 | |
| A | FR-E-15 678 (THOMAS GARE) <br> * the whole document * <br> --- | 1,3,4 | |
| P,A | EP-A-0 442 426 (GUMMIWERK KRAIBURG GMBH & CO.) <br> * the whole document * | 1 | |

The present search report has been drawn up for all claims

| Place of search | Date of completion of the search | Examiner |
|---|---|---|
| THE HAGUE | 27 FEBRUARY 1992 | MOLTO PINOL F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................................
& : member of the same patent family, corresponding document

EPO FORM 1503 03.82 (P0401)

EP 0 485 127 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| | ----- | | |

TECHNICAL FIELDS SEARCHED (Int. Cl.5)

The present search report has been drawn up for all claims

| Place of search | Date of completion of the search | Examiner |
|---|---|---|
| THE HAGUE | 27 FEBRUARY 1992 | MOLTO PINOL F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

14